# EUROPEAN PATENT SPECIFICATION

(11) **EP 1 599 646 B1**
(45) Date of publication and mention of the grant of the patent: **22.08.2007**
(21) Application number: 04715215.2
(22) Date of filing: 27.02.2004
(51) Int. Cl.: E04D 3/30, E04D 1/06, E04D 1/18, E04F 13/14, C04B 26/02

(54) **WALL, ROOF OR FACADE ELEMENT COMPRISING COMPOSITE LAYER**
WAND-, DACH- ODER FASSADENELEMENT MIT VERBUNDSCHICHT
ELEMENT DE PAROI, DE TOIT OU DE FACADE COMPRENANT UNE COUCHE COMPOSITE

(30) Priority: 27.02.2003 BE 200300129
(43) Date of publication of application: 30.11.2005
(73) Proprietor: Swenters, Ivo, 3660 Opglabbeek (BE)
(72) Inventor: Swenters, Ivo, 3660 Opglabbeek (BE)
(74) Representative: Van Malderen, Joëlle
(86) International application number: PCT/BE2004/000026
(87) International publication number: WO 2004/076774

(56) References cited:
- EP-A- 0 313 065
- FR-A- 2 686 362

## Description

### Field of the invention

The present invention relates to a prefabricated wall, roof or façade element comprising a plate or panel in metal or synthetic material. These elements are used among other in industrial construction.

### State of the art

The strength of a flat steel plate is determined by the kind of steel and the thickness of the plate. A thicker plate has a greater strength.

Metal front, roof or sandwich panels are made of plates, usually of steel, with a thickness varying from 0.4 mm to 1.25 mm. Steel roof or front panels, consisting of a single thin plate, cannot be realised as flat. This is because they possess insufficient strength to be able to be used as roof or façade element. These panels have to be profiled longitudinally in order to provide them with sufficient strength. Steel sandwich panels have a very limited strength if they are realised with flat plates. Here, in order to obtain sufficient strength, they too have to be profiled longitudinally. Therefore, wall, roof or facade elements, as defined in the preamble of claim 1, are generally known. However, profiling detracts immensely from the aesthetic aspect of such panels.

Therefore, manufacturers of steel roof or front panels and steel sandwich panels continuously have to balance the strength of the panel on the one hand and the aesthetic aspect of a.panel on the other hand.

Additional strength, both for steel roof or front panels and steel sandwich panels, is, as mentioned before, obtained by profiling them longitudinally. The deeper the profiling, the stronger the panel, but the less aesthetically attractive. A larger number of profiles in a panel results in additional strength as well, but again this is at the cost of the aesthetic aspect.

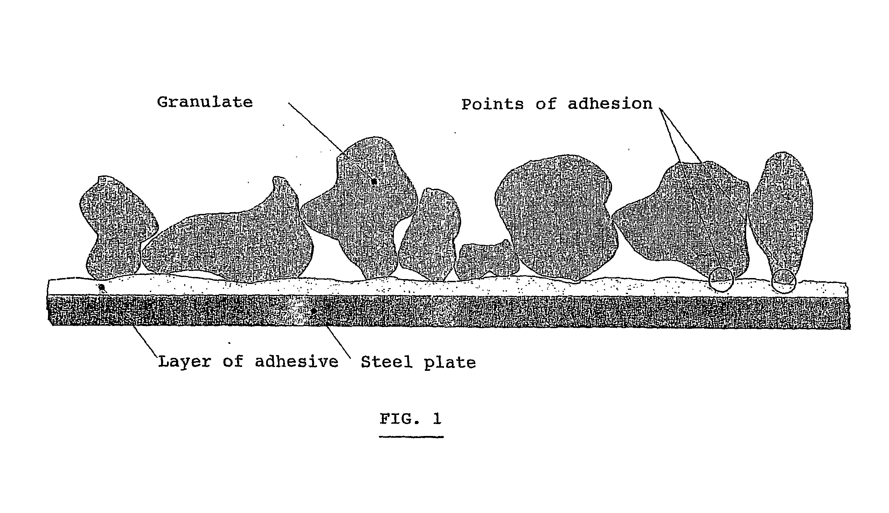

On the site of Insulated Panel Systems (www.insulated-panels.com) steel profiled plates and steel sandwich panels are mentioned with a granulate on them ("Rockwall Coating'). These granulates are applied to the plates by the dry shake technique. Figure 1 illustrates the attachment method in the dry shake technique. The carrier that is to be covered is first given a thick layer of adhesive. Subsequently the dry granulates are sprinkled in abundance over the carrier. After hardening of the adhesive layer the excess granulates, that have not contacted the adhesive layer, are removed from the carrier. This may be effected by sucking them up. Any residue may be removed afterwards with pressurized air or with a high-pressure cleaner. A drawback of this method is that it is not possible to obtain a flat plate at its upper side and simultaneously retain full profiling freedom under the composite layer. The granulate layer will always follow the profiling. In addition, with the dry shake technique the granulates are only attached to the carrier. The granulates do not adhere amongst themselves. The additional strength supplied to the carrier in this way is negligible.

Patent application WO 02/096824 discloses a non-profiled wall element in the form of a plate shaped covering, that substantially consists of a layer of granulate-shaped particles kept together with a hardened synthetic material. The covering may be provided on an existing support surface. The wall element may also comprise a (non-profiled) base plate. The structure of covering and base plate is typically not self-supporting : the plate cannot fulfil a carrying support function for a wall; the structure is intended to be attached against a support structure, for example, in or at a framework or against a wall. An important feature of all embodiments of the invention to which WO 02/096824 relates, is that the support surface remains in contact with the ambient air in order to avoid vapour-tension problems.

Document FR 2686362 relates to a prefabricated cladding for covering an elevator cabin. The cladding comprises a non-profiled support plate made of rigid material covered on one side with a layer of granules of hard material, these granules being agglomerated to each other by means of a curable bonding material. The support plate may be of metal. However, the whole is not self-supporting in the sense that it should be placed against a support structure to give it enough strength.

Materials that typically are used for covering walls or roofs, like cement fibre boards, plates in natural stone or in artificial natural stone, all need a support structure providing the plates with additional strength. Depending on the material used the support structures can be very expensive, which eventually may result in a very poor installation efficiency. This is for instance the case with natural stone and artificial granite of artificial marble, which all have a high specific weight.

### Aims of the invention

The present invention aims to provide profiled metal and synthetic material plates with additional strength, without detracting from the aesthetic aspect. The invention also aims to provide a method for producing such plates.

### Summary of the invention

The present invention relates to' a wall, roof or façade element, as defined in claim 1.

The profiled element in metal or synthetic material is preferably realized as a single flat plate or a sandwich panel.

The profiled element is typically realized in steel.

Preferably the composite layer has a thickness of at least twice the average granulate diameter.

In an alternate preferable embodiment of the invention the composite layer has a thickness from 1 to 100 mm and preferably from 1 to 30 mm.

In an advantageous embodiment the profiled element in metal or in synthetic material is a sandwich panel, the heads of which are also clad with said covering.

In a specific embodiment the composite layer comprises granulates made of a material selected from the group granite, marble, copper, glass, quartz, blue stone, limestone, synthetic material.

In a second object the invention relates to a method for manufacturing a wall, roof or façade element, as defined in claim 1, comprising the following steps:
- providing a profiled element in metal or synthetic material,
- providing the profiled element with a layer of adhesive,
- making a mixture of granulates and a resin,
- applying the mixture to the profiled element in a layer, the thickness of which exceeds at least twice that of the average granulate diameter,
- compressing the layer onto the profiled element by means of a plate.

Preferably the resin is UV-resistant.

The mixture is typically applied by means of a funnel or a smoothing plane scraper.

In a further embodiment, before the step of applying the mixture, the step is performed of providing a boundary element along the side of the profiled element.

The plate advantageously is resilient. It is preferably at an angle with the plane of the profiled element and attached to a shaft supported by bearings.

### Short description of the drawings

Fig. 1 represents the attachment of a composite layer with the dry shake technique, as used in the described state of the art.

Fig. 2 represents several embodiments according to the state of the art: (a) flat sandwich panel, (b) sandwich panel with light profiling, (c) sandwich panel with heavy profiling, (d) flat plate, (e) plate with light profiling, (f) plate with heavy profiling. For the latter three also a cross section is shown.

Fig. 3 represents the application of the mixture to the plate or panel.

Fig.4 represents the step of compressing the layer onto the profiled element.

Fig.5 represents a side-view of Fig.4.

Fig. 6 represents the attachment of a composite layer without fillers.

Fig. 7 represents the attachment of a composite layer with fillers.

Fig. 8 represents (a) flat sandwich panel and compares with two embodiments according to the invention: (b) sandwich panel with light profiling and (c) sandwich panel with heavy profiling. Fig.8(d) represents a flat plate and compares with embodiments according to the invention : (e) plate with light profiling and (f) plate with heavy profiling. For the latter three also a cross section is shown.

### Detailed description of the invention

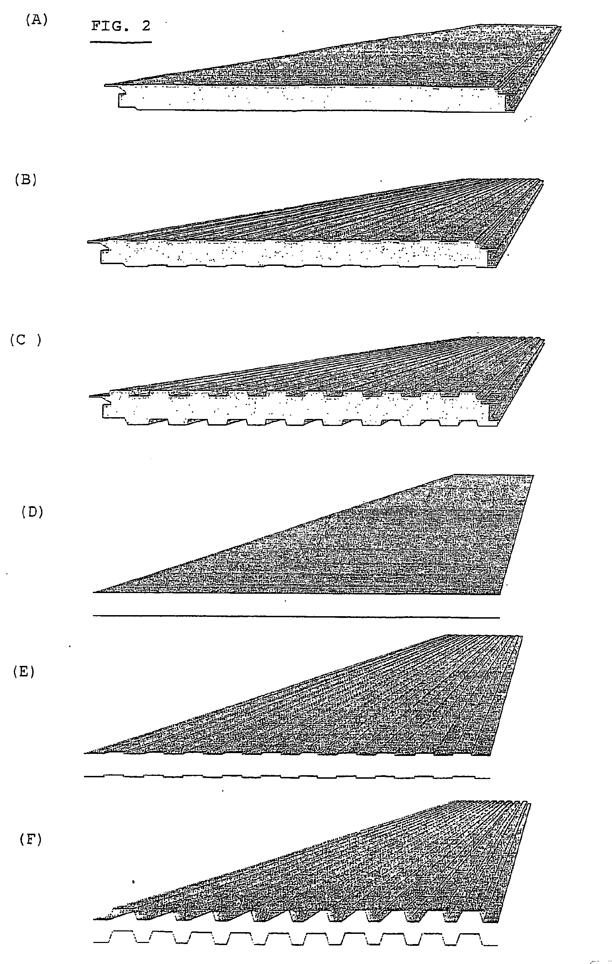

Figure 2 shows a number of embodiments according to the state of the art. As indicated above, a sandwich panel or a flat panel, among others, may be at issue. The figure shows for both cases a realization without profile, with light and with heavy profiling. As the profiling grows heavier, strength increases, but on the other hand the profiling clearly has a negative effect on the esthetic aspect.

In the invention additional strength is provided to the plate or to the sandwich panel by applying a profiling and a composite layer on a steel plate or a sandwich panel. Thanks to the added strength, less attachment points are needed according to the span tables. Very high spans can be realised in this way. The composite layer is more than sufficiently elastic to absorb any tension arising from the mounting of the plate or tension arising due to temperature differences after mounting of the plate. The layer may have a thickness from 1 to 100 mm and preferably from 1 to 30 mm. Consequentially, thanks to the composite layer the steel plate can become more than ten times as thick. The composite layer may be realized in several materials like granite, copper, marble, glass, quartz, blue stone, limestone, synthetic material,.... Typically the layer is applied in granulate form.

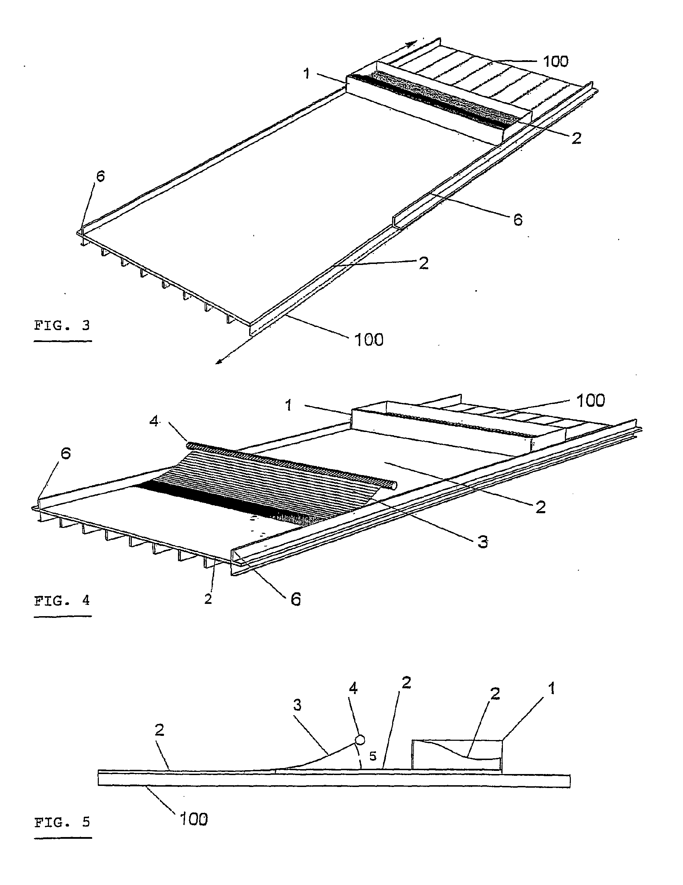

The carrier that is to be covered is first provided with an adhesive layer that does not necessarily have to be applied thickly. Prior to applying the granulates to the carrier, they are first admixed to a resin. The resin consists of either one or more components. Preferably an UV-resistant resin is used as in most applications the resulting wall or roof elements are exposed to sunlight. Above the carrier (100), being a plate or a (sandwich) panel, is arranged a funnel (1) that is movable over the full length of the plate or panel (see Fig.3). The funnel (1) is filled with the mixture (2) of granulates and resin. If the funnel (1) is positioned e.g. 15 mm higher than the upper side of the carrier (100), the mixture (2) will be spread over the carrier in a 15 mm layer when the carrier is moved. At this stage the layer is not compact yet. In an alternative embodiment the funnel can be substituted by a smoothing plane scraper that pushes the mixture ahead and leaves behind a layer of a certain thickness. Preferably a longitudinal boundary element (6) is used along the side of the carrier in order to keep the mixture on the carrier. Alternatively the funnel stands still and the carrier is moved in longitudinal direction, which of course yields the same result. A combination of both approaches (both funnel and carrier moving) is possible as well. The height at which the funnel or smoothing plane scraper is to be placed depends on the average granulate thickness.

After applying the mixture (2) to the carrier (100) the mixture is compressed by means of a preferably resilient plate (3) positioned at an angle with the carrier plane (see Fig.4 and Fig.5). The resilient plate (3) is movable in the longitudinal direction of the carrier (100). As in the previous step the resilient plate (3) can stand still and the carrier can be moving instead. The finishing of the panel or plate is determined by the angle (5) between the resilient plate and the panel or plate (see Fig.5) and by the pressure the resilient plate exerts. This pressure is preferably exerted by attaching the resilient plate to a shaft (4) supported by bearings. The shaft (4) can then be turned towards the surface of the panel or plate. The height of the shaft (4) compared to the panel or plate is determined by the angle (5). The mixture (2) will be compressed and the granulates will be oriented more or less parallel to the visible surface. This allows to obtain a flat covering. This means that the top surface of the covering is essentially parallel to the plane of the profiled element. The surface of the covering does not follow the profiles of the element.

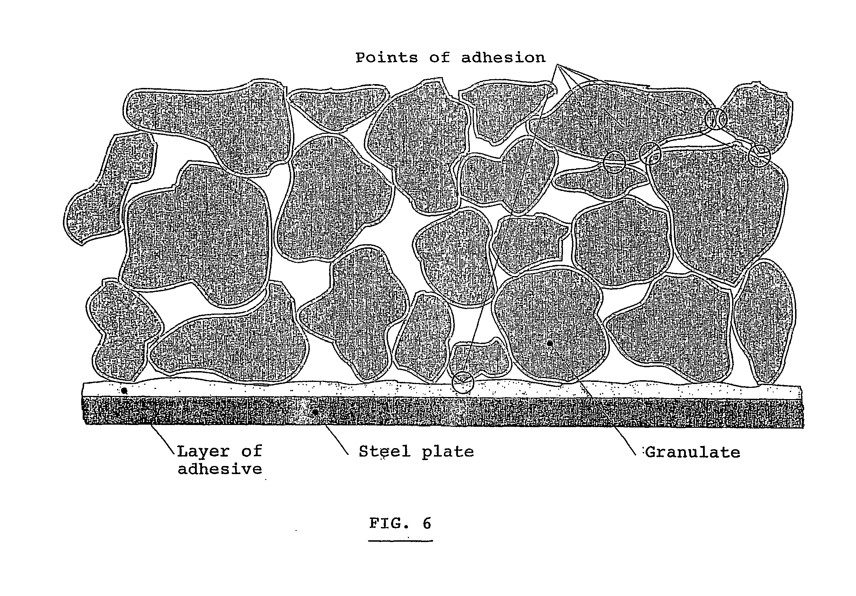

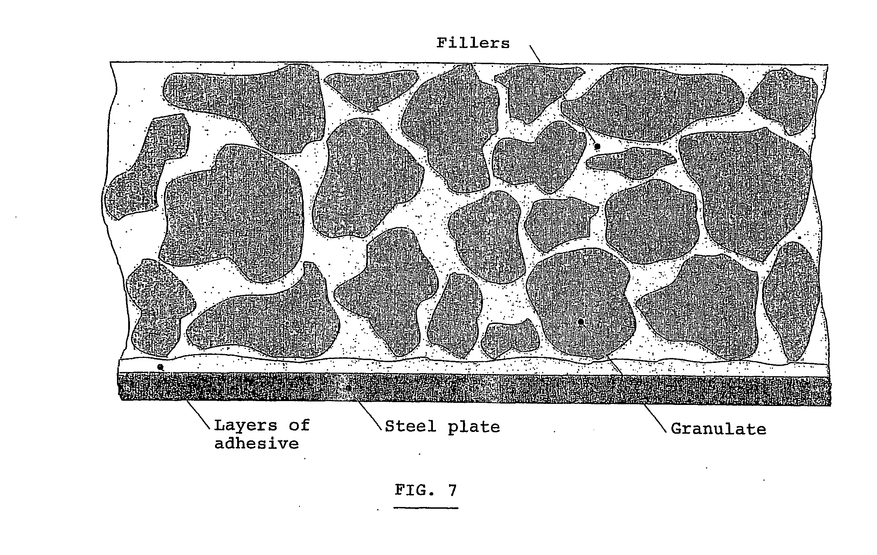

The resulting whole of carrier with a granulate layer is much stronger than a carrier covered by the above mentioned dry shake technique. The granulates are such that the smallest grains are big enough to retain an open space between the granulates after compacting of the layer. This has the advantage that the specific weight can be kept limited with respect to an embodiment with a composite layer with fillers. Fig.6 shows an embodiment where the composite layer is attached without fillers. In a composite layer with fillers (see Fig. 7) the pores between the granulates are filled with very fine fillers so that the latter is substantially waterproof. Of course the whole of carrier + granulate layer is heavier than a carrier with a layer without fillers. An example of a composite layer with fillers is "artificial granite" or "artificial marble".

Thanks to the profiling the steel plate or the sandwich panel possesses a kind of built-in structure. Therefore it can immediately be placed against the steel or concrete structure of the carcass of the building, which yields an enormous gain in installation efficiency and in weight. A further gain in installation efficiency is obtained with the steel sandwich panels provided with a composite layer according to the present invention, when the panel's heads are covered with said composite layer as well. This yields the additional advantage that the finishing of both windows and doors and that of the building's corners does not have to be performed at the building site. When working with uncovered sandwich panels one still has to apply corner profiles after having installed the sandwich panels, which takes considerably more time.

Apart from the extra strength which is provided to the profiled metal element, the biggest advantage of the invention is that under the composite layer a metal element with any profiling can be used. Thanks to the composite layer the aesthetic effect of the panel is always retained. The result is an essentially flat panel, which is the most interesting form from a commercial point of view. With essentially flat is meant that some light unevenness may occur. One may proceed with a maximum number of profilings and with a maximum depth of the profilings, thus giving the wall, roof or façade element maximal strength without their external aspect esthetically changing.

When using a composite layer of natural stone the layer can be calibrated and polished, thus obtaining artificial granite or artificial marble. This implies these panels in artificial granite or artificial marble do not need any additional support structure. The panels can be as long as 10 m, whereas the plates in other materials that are commonly applied for cladding walls have a maximum length of 3 m.

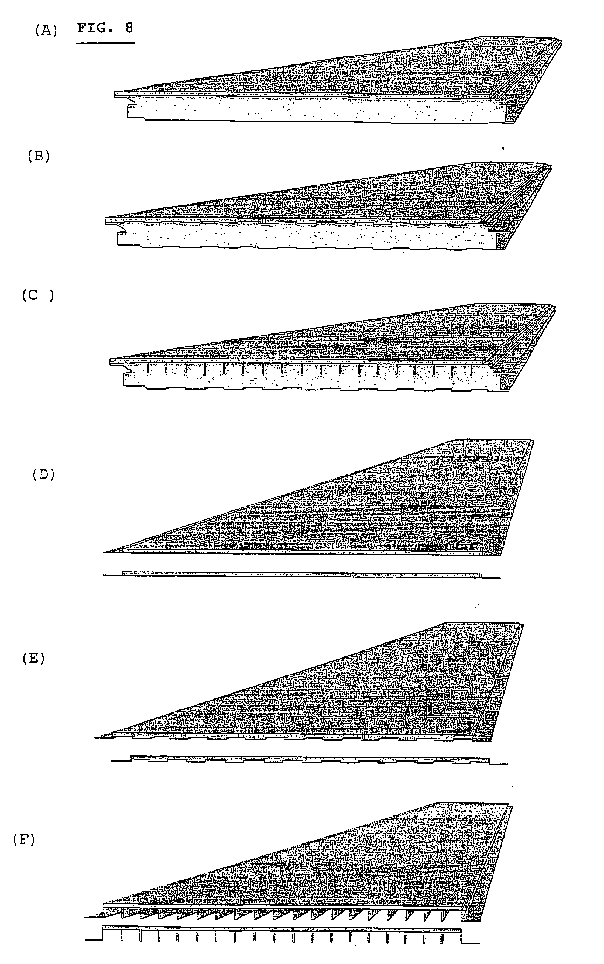

In Figure 8 several embodiments according to the invention are shown, both for some flat plates and sandwich panels. The examples illustrate again that whatever the used profiling, a substantially flat surface is retained at the upper side.

A wall being clad with artificial stone only has an aestethic function. One still needs a separate outer wall, provided with a support structure for holding the panels. Also the isolation has to be provided separately. When using the steel sandwich panel of this invention no separate outer wall, isolation or extra support structure is required anymore.

It is pointed out that reinforcing the steel plate or a steel sandwich panel by means of applying a composite layer, as described above, may also be applied if an element with for example a curved form is at issue.

These wall, roof of façade elements can primarily find application in the market of industrial construction, but thanks to the aesthetic advantages resulting from the invention they become applicable in house-construction.

## Claims

1. Wall, roof or façade element comprising a profiled element of metal or of synthetic material having a profiled surface, said wall, roof or façade element further comprising a covering applied on said profiled surface of said profiled element in metal or in synthetic material, **characterised in that** said covering is composed of at least a composite layer comprising mutually adhering granulates and **in that** the top surface of said covering, i.e. the side of the covering opposite to said profiled surface, is essentially flat such that the top surface of the said covering is essentially parallel to a flat plane defined by the profiled element and such that the top surface of the covering does not follow the profiles of the profiled surface of the element.

2. Wall, roof or façade element according to claim 1, **characterized in that** said profiled element in metal or in synthetic material is a single panel or a sandwich panel.

3. Wall, roof or façade element according to claim 1 or 2, **characterized in that** said profiled element is of steel.

4. Wall, roof or façade element according to claim 1, 2 or 3, **characterized in that** said composite layer has a thickness of at least twice the average diameter of the granulate.

5. Wall, roof or façade element according to claim 1, 2 or 3, **characterized in that** said composite layer has a thickness from 1 to 100 mm.

6. Wall, roof or façade element according to claim 1, 2 or 3, **characterized in that** said composite layer has a thickness from 1 to 30 mm.

7. Wall, roof or façade element according to any of the previous claims, **characterized in that** said profiled element in metal or in synthetic material is a sandwich panel, the heads of which are also clad with said covering.

8. Wall, roof or façade element according to any of the previous claims, **characterized in that** said 2 composite layer comprises granulates made of a material selected from the group of granite, marble, copper, glass, quartz, blue stone, limestone, synthetic material.

9. Method for manufacturing a wall, roof or façade element as defined in any of claims 1 to 8, comprising the following steps:
- providing a profiled element (100) in metal or synthetic material,
- providing said profiled element (100) with a layer of adhesive,
- making a mixture (2) of granulates and a resin,
- applying said mixture (2) to said profiled element (100) in a layer, the thickness of which exceeds at least twice that of the average granulate diameter,
- compressing said layer onto said profiled element by means of a plate (3).

10. Method for manufacturing a wall as in claim 9, roof or façade element, wherein said resin is UV-resistant.

11. Method for manufacturing a wall, roof or façade element as in claims 9 or 10, wherein said mixture (2) is applied by means of a funnel or a smoothing plane scraper.

12. Method for manufacturing a wall, roof or façade element as in any of claims 9 to 11, wherein before the step of applying said mixture the step is performed of providing a boundary element (6) along the side of said profiled element (100).

13. Method for manufacturing a wall, roof or façade element as in any of claims 9 to 12, wherein said plate (3) is a resilient plate.

14. Method for manufacturing a wall, roof or façade element as in any of claims 9 to 13, wherein said plate (3) is at an angle with the plane of said profiled element (100).

15. Method for manufacturing a wall, roof or façade element as in any of claims 9 to 14, wherein said plate (3) is attached to a shaft (4) supported by bearings.

## Patentansprüche

1. wand-, Dach- oder Fassadenelement, umfassend ein profiliertes Element aus Metall oder aus einem synthetischen Material, das eine profilierte Fläche aufweist, wobei das Wand-, Dach oder Fassadenelement weiter eine Abdeckung umfasst, die auf die profilierte Fläche des profilierten Elements aus Metall oder aus einem synthetischen Material aufgebracht ist, **dadurch gekennzeichnet, dass** die Abdeckung aus zumindest einer Verbundschicht besteht, die aneinander haftende Körnchen umfasst, und dass die obere Fläche der Abdeckung, d.h., die Seite der Abdeckung, die zur profilierten Fläche entgegengesetzt ist, im Wesentlichen flach ist, so dass die obere Fläche der Abdeckung im Wesentlichen parallel zu einer flachen Ebene liegt, die durch das profilierte Element definiert wird, und so dass die obere Fläche der Abdeckung den Profilen der profilierten Fläche des Elements nicht folgt.

2. Wand-, Dach- oder Fassadenelement nach Anspruch 1, **dadurch gekennzeichnet, dass** das profilierte Element aus Metall oder aus einem synthetischen Material eine einzelne Platte oder eine Verbundplatte ist.

3. Wand-, Dach- oder Fassadenelement nach Anspruch 1 oder 2, **dadurch gekennzeichnet, dass** das profilierte Element aus Stahl besteht.

4. Wand-, Dach- oder Fassadenelement nach Anspruch 1, 2 oder 3, **dadurch gekennzeichnet, dass** die Verbundschicht eine Dicke aufweist, die zumindest das Doppelte des durchschnittlichen Durchmessers der Körnchen beträgt.

5. wand-, Dach- oder Fassadenelement nach Anspruch 1, 2 oder 3, **dadurch gekennzeichnet, dass** die Verbundschicht eine Dicke von 1 bis 100 mm aufweist.

6. Wand-, Dach- oder Fassadenelement nach Anspruch 1, 2 oder 3, **dadurch gekennzeichnet, dass** die Verbundschicht eine Dicke von 1 bis 30 mm aufweist.

7. Wand-, Dach- oder Fassadenelement nach einem der vorhergehenden Ansprüche, **dadurch gekennzeichnet, dass** das profilierte Element aus Metall oder aus einem synthetischen Material eine Verbundplatte ist, deren Köpfe ebenfalls mit der Abdeckung verkleidet sind.

8. Wand-, Dach- oder Fassadenelement nach einem der vorhergehenden Ansprüche, **dadurch gekennzeichnet, dass** die Verbundschicht Körnchen umfasst, die aus einem Material bestehen, das aus der Gruppe aus Granit, Marmor, Kupfer, Glas, Quarz, Blaustein, Kalkstein und synthetischem Material gewählt ist.

9. Verfahren zur Herstellung eines wie in einem der Ansprüche 1 bis 8 definierten wand-, Dach- oder Fassadenelements, umfassend die folgenden Schritte:
- Bereitstellen eines profilierten Elements (100) aus Metall oder einem synthetischen Material,
- Bereitstellen des profilierten Elements (100) mit einer Schicht aus Klebstoff,
- Herstellen eines Gemischs (2) aus Körnchen und einem Harz,
- Aufbringen des Gemischs (2) in einer Schicht, deren Dicke zumindest das Doppelte des durchschnittlichen Körnchendurchmessers übersteigt, auf das profilierte Element (100),
- Pressen der Schicht durch eine Platte (3) auf das profilierte Element.

10. Verfahren zur Herstellung eines Wand-, Dach- oder Fassadenelements nach Anspruch 9, wobei das Harz UVbeständig ist.

11. Verfahren zur Herstellung eines Wand-, Dach- oder Fassadenelements nach Anspruch 9 oder 10, wobei das Gemisch (2) durch einen Trichter oder einen glättenden flachen Schaber aufgebracht wird.

12. Verfahren zur Herstellung eines Wand-, Dach- oder Fassadenelements nach einem der Ansprüche 9 bis 11, wobei vor dem Schritt des Aufbringens des Gemischs der Schritt des Bereitstellens eines Begrenzungselements (6) entlang der Seite des profilierten Elements (100) durchgeführt wird.

13. Verfahren zur Herstellung eines Wand-, Dach- oder Fassadenelements nach einem der Ansprüche 9 bis 12, wobei die Platte (3) eine elastische Platte ist.

14. Verfahren zur Herstellung eines Wand-, Dach- oder Fassadenelements nach einem der Ansprüche 9 bis 13, wobei sich die Platte (3) in einem Winkel mit der Ebene des profilierten Elements (100) befindet.

15. Verfahren zur Herstellung eines Wand-, Dach- oder Fassadenelements nach einem der Ansprüche 9 bis 14, wobei die Platte (3) an einer Welle (4) angebracht ist, die durch Lager gestützt ist.

## Revendications

1. Elément de paroi, de toit ou de façade comprenant un élément profilé en métal ou en matériau synthétique ayant une surface profilée, ledit élément de paroi, de toit ou de façade comprenant en outre un recouvrement appliqué sur ladite surface profilée dudit élément profilé en métal ou en matériau synthétique, **caractérisé en ce que** ledit recouvrement est composé d'au moins une couche composite comprenant des granulés se fixant mutuellement et **en ce que** la surface supérieure dudit recouvrement, c'est-à-dire le côté du recouvrement opposé à ladite surface profilée, est essentiellement plate, de sorte que la surface supérieure dudit recouvrement est essentiellement parallèle à un plan plat défini par l'élément profilé et de sorte que la surface supérieure du recouvrement ne suit pas les profils de la surface profilée de l'élément.

2. Elément de paroi, de toit ou de façade selon la revendication 1, **caractérisé en ce que** ledit élément profilé en métal ou en matériau synthétique est un panneau unique ou un panneau sandwich.

3. Elément de paroi, de toit ou de façade selon la revendication 1 ou 2, **caractérisé en ce que** ledit élément profilé est de l'acier.

4. Elément de paroi, de toit ou de façade selon la revendication 1, 2 ou 3, **caractérisé en ce que** ladite couche composite a une épaisseur représentant au moins deux fois le diamètre moyen du granulé.

5. Elément de paroi, de toit ou de façade selon la revendication 1, 2 ou 3, **caractérisé en ce que** ladite couche composite a une épaisseur de 1 100 mm.

6. Elément de paroi, de toit ou de façade selon la revendication 1, 2 ou 3, **caractérisé en ce que** ladite couche composite a une épaisseur de 1 à 30 mm.

7. Elément de paroi, de toit ou de façade selon l'une quelconque des revendications précédentes, **caractérisé en ce que** ledit élément profilé en métal ou en matériau synthétique est un panneau sandwich, dont les têtes sont également recouvertes avec ledit recouvrement.

8. Elément de paroi, de toit ou de façade selon l'une quelconque des revendications précédentes, **caractérisé en ce que** ladite couche composite comprend des granulés réalisés à partir d'un matériau choisi parmi le groupe constitué par le granit, le marbre, le cuivre, le verre, le quartz, le sulfate de cuivre, le calcaire, un matériau synthétique,

9. Procédé pour fabriquer un élément de paroi, de toit ou de façade tel que défini selon l'une quelconque des revendications 1 à 8, comprenant les étapes suivantes consistant à :
prévoir un élément profilé (100) en métal ou en matériau synthétique,
prévoir ledit élément profilé (100) avec une couche d'adhésif,
réaliser un mélange (2) de granulés et d'une résine,
appliquer ledit mélange (2) audit élément profilé (100) dans une couche, dont l'épaisseur dépasse au moins deux fois le diamètre moyen du granulé,
comprimer ladite couche sur ledit élément profilé au moyen d'une plaque (3).

10. Procédé pour fabriquer un élément de paroi selon la revendication 9, de toit ou de façade, dans lequel ladite résine est résistante aux UV.

11. Procédé pour fabriquer un élément de paroi, de toit ou de façade selon les revendications 9 ou 10, dans lequel ledit mélange (2) est appliqué au moyen d'un entonnoir ou d'un grattoir pour rendre la surface lisse.

12. Procédé pour fabriquer un élément de paroi, de toit ou de façade selon l'une quelconque des revendications 9 à 11, dans lequel avant l'étape consistant à appliquer ledit mélange, on réalise l'étape consistant à prévoir un élément de barrière (6) le long du côté dudit élément profilé (100).

13. Procédé pour fabriquer un élément de paroi, de toit ou de façade selon l'une quelconque des revendications 9 à 12, dans lequel ladite plaque (3) est une plaque élastique.

14. Procédé pour fabriquer un élément de paroi, de toit ou de façade selon l'une quelconque des revendications 9 à 13, dans lequel ladite plaque (3) est placée selon un angle par rapport au plan dudit élément profilé (100).

15. Procédé pour fabriquer un élément de paroi, de toit ou de façade selon l'une quelconque des revendications 9 à 14, dans lequel ladite plaque (3) est fixée sur un arbre (4) supporté par des paliers.
